Europäisches Patentamt

European Patent Office

Office européen des brevets

(19)

(11) **EP 0 467 133 B1**

(12) **EUROPÄISCHE PATENTSCHRIFT**

(45) Veröffentlichungstag und Bekanntmachung des Hinweises auf die Patenterteilung:
**10.12.1997  Patentblatt 1997/50**

(51) Int Cl.⁶: **G01K 7/22**, H01C 7/02, F24C 15/10

(21) Anmeldenummer: **91110777.9**

(22) Anmeldetag: **28.06.1991**

(54) **Temperatursensor oder -sensoranordnung aus Glaskeramik und kontaktierenden Filmwiderständen**

Temperature sensor or sensing devices made of glass-ceramics with contacting film-resistances

Capteur de températures ou dispositif de mesure de la température en céramique de verre pourvu de résistances en couches minces

(84) Benannte Vertragsstaaten:
**AT CH DE FR GB IT LI**

(30) Priorität: **18.07.1990  DE 4022845**

(43) Veröffentlichungstag der Anmeldung:
**22.01.1992  Patentblatt 1992/04**

(73) Patentinhaber:
- **Schott Glaswerke**
  **55122 Mainz (DE)**
  Benannte Vertragsstaaten:
  **CH DE FR IT LI AT**
- **Carl-Zeiss-Stiftung**
  **trading as SCHOTT GLASWERKE**
  **55122 Mainz (DE)**
  Benannte Vertragsstaaten:
  **GB**

(72) Erfinder:
- **Kristen, Klaus**
  **W-6200 Wiesbaden (DE)**
- **Scheidler, Herwig**
  **W-6500 Mainz (DE)**

(56) Entgegenhaltungen:
**EP-A- 0 147 056**       **DE-A- 2 145 301**
**DE-A- 2 210 651**       **GB-A- 2 138 659**

**Beschreibung**

Die Erfindung betrifft Temperatursensoren oder -sensoranordnungen aus Glaskeramik und kontaktierenden Filmwiderständen, die insbesondere zur Leistungssteuerung und -begrenzung bei Glaskeramikkochfeldern geeignet sind.

Die Verwendung von Glaskeramiken als Temperatursensoren ist bereits aus der DE-PS 21 39 828 bekannt. In dieser Druckschrift wird insbesondere ein Temperaturmeßwiderstand aus einer Glaskeramik aus dem System $SiO_2$-$Al_2O_3$-$Li_2O$ beschrieben. Diese Glaskeramik zeichnet sich aufgrund ihrer sehr geringen thermischen Ausdehnung $\alpha \leq 1,5 \cdot 10^{-6}$/K durch eine hohe Temperaturwechselbeständigkeit aus und ist daher insbesondere zur Verwendung als Meßsonde in sehr heißen Industrieöfen, Abgaskammern etc. geeignet.

Zur Temperaturüberwachung großer Flächen wird in der Druckschrift ein Sensor beschrieben, welcher sich dadurch auszeichnet, daß auf flächig ausgebildeten Glaskeramikträgern mit Leiterbahnen aus Au, Pt oder Ag streifenförmige Glaskeramikbereiche abgegrenzt und kontaktiert werden, deren elektrischer Widerstand als Temperaturmeßwiderstand genutzt wird. Nach der Druckschrift kann man sich den Gesamtwiderstand dieser Anordnung aus einer Vielzahl differentieller, parallel geschalteter Widerstandselemente zusammengesetzt denken, wobei der kleinste Widerstand dort auftritt, wo die Fläche am stärksten erhitzt wird. Die geringe Wärmeleitung der Glaskeramik verhindert einen schnellen Temperaturausgleich der überhitzten Stelle mit der Umgebung. Der Gesamtwiderstand dieser Anordnung wird so lange von dem Widerstand der heißesten Stelle der Fläche bestimmt, bis der Temperaturausgleich erfolgt ist. Örtliche Überhitzungen bewirken somit kurzzeitige krasse Widerstandsänderungen des als Fläche ausgebildeten Temperaturmeßwiderstandes, die nach der Druckschrift zum Beispiel zur Steuerung eines Überhitzungsschutzes dienen können.

Die US-PS 4 237 368 beschreibt eine Anwendung der zuvor beschriebenen Sensoren zur Überwachung der Temperatur der Kochzonen in Glaskeramikkochflächen mit Hilfe von elektrischen Komparatoren. Dazu sind in den Kochzonen mit jeweils zwei parallelen Leiterbahnen aus Gold streifenförmige Glaskeramikbereiche, die längs eines Durchmessers der Kochzonen verlaufen, als Temperatursensoren abgegrenzt und kontaktiert. Die kontaktierten Leiterbahnen sind mit einem parallel geschalteten Shunt-Widerstand an ihren äußersten Enden überbrückt, die bei kalten Kochzonen eine Thermoelement-Bruchsicherung realisieren. Je eine der beiden Leiterbahnen der Temperatursensoren ist mit einer Leiterbahn verbunden, die die gesamte Kochfläche längs ihrer Peripherie umrundet und als Glasbruchsensor wirkt.

Die DE-OS 37 44 373 A1 beschreibt eine elektronische Leistungssteueranordnung und -verfahren für ein Glaskeramikkochfeld, das zur Temperaturermittlung Sensoren gemäß der zuvor beschriebenen Anordnung der US-PS 4 237 368 verwendet. Die an die Kochzonen jeweils abgegebene Heizleistung wird dabei in Abhängigkeit von der Glaskeramiktemperatur und deren Änderungsgeschwindigkeit gesteuert. Dazu liefern die in den Kochzonen durch parallele Goldleiterbahnen abgegrenzten streifenförmigen Glaskeramikwiderstände infolge ihrer Widerstandsänderung mit der Temperatur die erforderlichen Temperatursignale.

Eine verbesserte Leistungssteuer- und -überwachungsanordnung für Glaskeramikkochfelder, die in Bezug auf die Temperatursensoranordnungen in den Kochzonen mit der Anordnung der oben beschriebenen Art prinzipiell übereinstimmt, ist noch aus der DE-OS 37 44 372 bekannt.

Der spezifische Volumenwiderstand aller bekannten Glaskeramiken, die als Kochfläche zum Einsatz kommen, liegt bei 20°C in der Größenordnung von $10^{13}\,\Omega \cdot cm$ bis $10^{15}\,\Omega \cdot cm$ und erreicht bei Temperaturen um 200°C Werte zwischen $10^7\,\Omega \cdot cm$ bis $10^9\,\Omega \cdot cm$. Unabhängig von der jeweiligen Sensorgeometrie ändert sich damit das Temperaturmeßsignal - oder Sensorstrom oder der Spannungsabfall an einem mit dem Sensor in Reihe geschalteten Meßwiderstand - in dem genannten Temperaturbereich um 6 Zehnerpotenzen. Zur Auswertung und Weiterverarbeitung dieser Temperaturmeßsignale sind teure elektronische Präzisionsgeräte, die mit Meßbereichsumschaltungen und/oder logarithmischen Verstärkern ausgerüstet sind, erforderlich, die in Kochherden nicht eingesetzt werden können. Erschwerend kommt hinzu, daß die großflächigen und sehr hochohmigen Sensoren, die in unmittelbarer Nähe der Heizspiralen oder Kochzonenbeheizung angeordnet sind, empfindlich gegenüber kapazitiv oder induktiv eingestreuten Störsignalen sind, zu deren Beseitigung ein zusätzlicher elektronischer Aufwand getrieben werden muß.

Aufgrund der geschilderten Problematik sind alle im "Stande der Technik" beschriebenen Glaskeramik-Temperatursensoren zur Steuerung und Regelung der Kochzonentemperatur von Glaskeramikkochflächen im Temperaturbereich unter 200°C nicht geeignet. Dies ist ein erheblicher Nachteil, denn zum Warmhalten, Schmelzen von Fetten und bei vielen anderen Anwendungen der Glaskeramikkochfelder ist die exakte Einhaltung von Kochzonentemperaturen unterhalb von 200°C notwendig und für den Benutzer von großer Bedeutung.

Ein weiterer Nachteil der aus den obengenannten Druckschriften bekannten Sensoren ist, daß sie jeweils nur längs eines Durchmessers bzw. halben Durchmessers in den Kochzonen angeordnet sind und aufgrund der bereits erwähnten geringen Wärmeleitung der Glaskeramik, sie liegt in der Größenordnung von 2 bis 3 W/mK, nur die Temperaturen in diesen linienförmigen Teilbereichen der Kochzonen erfassen können. Damit ist weder ein ausreichender Überhitzungsschutz der gesamten Kochzone gewährleistet, noch ist das von den linienförmigen Teilbereichen gelieferte Temperatursignal auf den tatsächlichen Wärmefluß zum gesamten Topfboden bezogen, so daß die Heizeinrichtungen mit den Sensoren der obengenannten Druckschriften von einem Temperatursignal gesteuert werden, das nicht dem momentanen Wärmeentzug aus der gesamten Kochzone entspricht.

Bekannt sind ferner Schutztemperaturbegrenzer (z.B. gemäß DE-PS 37 05 260.8 oder DE-PS 37 05 261.6, die als getrenntes Bauteil in geringem Abstand unter den Kochzonen von Glaskeramikkochflächen längs eines Durchmessers der Kochzonen angeordnet sind. Sie werden sowohl von dem darunter befindlichen Strahlungsheizelement als auch von der Strahlung der Kochflächenunterseite beheizt. Sie bestehen aus einem metallischen Stab mit großer Wärmedehnung, der in einem Rohr aus einem Material mit geringer Wärmedehnung angeordnet ist. Ein Schnappschalter wird bei Erreichen einer vorgegebenen Temperatur aufgrund der relativen Wärmedehnung zwischen Metallstab und Rohr betätigt. Dies führt zur Energietaktung des Heizelements innerhalb eines schmalen Temperaturintervalles, das durch die Schalthysteresis des Schnappschalters festgelegt ist.

Der Temperaturbegrenzer spricht auf die integrale Temperatur des Systems Heizelement/Kochfläche an. Die Strahlungsbeheizung seitens der Kochfläche vermittelt den Bezug zum aufgesetzten Topf.

Ein Nachteil dieser Begrenzeranordnung ist, daß auch hier die kochflächenseitige Beheizung des Begrenzerstabes schwerpunktmäßig von der Strahlung des direkt darüber angeordneten linienförmigen Durchmesserbereiches der Kochzone erfolgt. Wird dieser Durchmesserzone, zum Beispiel im Randbereich, durch einen aufgesetzten Topf viel Wärme entzogen, so bleibt dort der Begrenzer kälter als in seinem Mittenbereich. Der Begrenzerstab erleidet dadurch eine scheinbare Verkürzung, da für das Schalten nun im wesentlichen nur noch der heißere Mittenbereich aktiv ist. Damit wird bei konstanter Schaltcharakteristik der Schaltpunkt, also auch die Begrenzungstemperatur, angehoben. Durch ungleichmäßige Strahlungsbeheizung seitens der Kochfläche wird somit die Höhe der Begrenzungstemperatur nach Maßgabe der jeweils zur Wirkung kommenden "aktiven Begrenzerstablänge" beeinflußt. In ungünstigen Fällen kann dies Überhitzungen der Kochzonen zur Folge haben.

Die Aufgabe der Erfindung ist, einen Temperatursensor oder eine -sensoranordnung der eingangs genannten Art bereitzustellen, dessen/deren Temperatureinsatzbereich zu niedrigeren Temperaturen hin weit über den Einsatzbereich herkömmlicher Glaskeramik-Temperatursensoren hinaus ausgedehnt ist, und der/die darüber hinaus im Gegensatz zu den bekannten Sensoren eine sichere Temperaturüberwachung der gesamten beheizten Fläche, z.B. in der Kochzone einer Glaskeramikkochfläche, gestattet. Insbesondere soll der Sensor als Meßsonde zur Leistungssteuerung und -begrenzung bei Glaskeramikkochfeldern einsetzbar sein.

Diese Aufgabe wird erfindungsgemäß mit den in den Patentansprüchen 1 und 2 beschriebenen Sensoren oder Sensoranordnungen gelöst.

Nach der Erfindung sind mit Dünn- und/oder Dickfilmwiderständen auf Flächen oder speziellen Trägern aus Glaskeramik ein oder mehrere Glaskeramikwiderstände abgegrenzt und kontaktiert. Die Glaskeramikwiderstände bilden zusammen mit den als Temperaturmeßwiderstände ausgebildeten Filmwiderständen Parallel- und/oder Kettenschaltungen aus, die die Temperatursensoren bilden, deren Temperatur-Widerstandscharakteristik durch die Überlagerung der Temperatur-Widerstandscharakteristiken der Einzelwiderstände, durch die Widerstandswerte der Einzelwiderstände sowie durch deren Geometrie und Schaltung festgelegt ist.

Eine Parallelschaltung wird dabei durch einen an seinen beiden Enden mit elektrischen Anschlußkontakten versehenen Dünn- oder Dickfilmwiderstand gebildet. Der Filmwiderstand wird mit zunehmender Temperatur von dem Widerstand der Glaskeramik, die unter und längs des Filmwiderstandes angeordnet ist, geshuntet.

Zwei einander gegenüberliegende, d.h. im wesentlichen parallele, Dünn- und/oder Dickfilmwiderstände, die jeder nur an einem Ende mit elektrischen Anschlußkontakten versehen sind, bilden zusammen mit dem zwischen den Filmwiderständen angeordneten Glaskeramikwiderstand, den man als eine Vielzahl nebeneinander liegender Widerstandszellen auffassen kann, eine Kettenschaltung. Von den aus dem Stand der Technik bekannten Sensoren, die einen ähnlichen Aufbau aufweisen, unterscheidet sich eine Kettenschaltung nach der Erfindung dadurch, daß der Flächenwiderstand der die Widerstandszellen kontaktierenden Filmwiderstände nicht, wie bei den bekannten Sensoren vorausgesetzt, vernachlässigt werden kann. Die Flächenwiderstände liegen nach der Erfindung bei der oben beschriebenen Anordnung in der Größenordnung von 1 m $\Omega/\square$ bis 1000 $\Omega/\square$.

Der elektrische Widerstand aller derzeit bekannten Glaskeramiken fällt mit steigender Temperatur exponentiell ab. Es gilt das Gesetz von Rasch und Hinrichsen:

$$\text{Lg } \rho = A + \frac{B}{T}$$

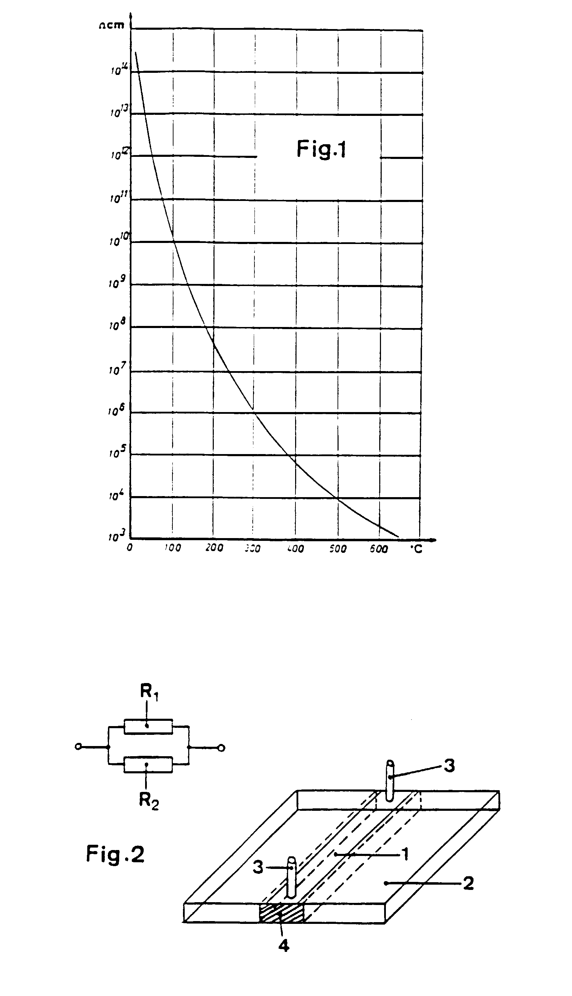

worin $\rho$ den spezifischen Volumenwiderstand, A und B materialspezifische Konstanten und T die absolute Temperatur bedeuten. Als Beispiel zeigt Figur 1 den Verlauf des spezifischen Volumenwiderstandes einer für den Einsatz als Kochflächen bevorzugten Glaskeramik aus dem System $SiO_2$-$Al_2O_3$-$U_2O$ mit den Konstanten A = -1,922 und B = 4561,6 in Abhängigkeit von der Temperatur.

Gemäß der Erfindung werden als Trägermaterialien Glaskeramiken wegen ihrer geringen thermischen Ausdehnung und ihrer Temperaturwechselbeständigkeit bevorzugt. Die Erfindung ist jedoch keineswegs auf die Verwendung von Glaskeramiken beschränkt. Die Sensoren bzw. Sensoranordnungen können auch auf Trägern aus vergleichbaren Materialien, wie beispielsweise Glas oder Keramik, aufgebracht sein.

Für die als Temperaturmeßwiderstände ausgebildeten kontaktierenden Dünn- oder Dickfilmwiderstände werden zweckmäßigerweise Materialien mit positivem Temperaturkoeffizienten des elektrischen Widerstandes und somit linear mit der Temperatur ansteigenden Widerständen gewählt. In Sonderfällen können insbesondere die kontaktierenden Dickfilmwiderstände auch aus Materialien hergestellt sein, deren Widerstandsverlauf mit der Temperatur PTC- oder NTC-Charakter aufweist.

Als Materialien für die Dünnfilmwiderstände haben sich Resinate der Metalle und Metallegierungen Au, Ag, Pt, Pd, Au/Ag, Au/Pt, Ag/Pd sowie Au/Pt/Pd bewährt, die bis zu Temperaturen von 800°C eingesetzt werden können und eine gute Stabilität des elektrischen Widerstandes und Temperaturkoeffizienten des elektrischen Widerstandes aufweisen.

Auch Dickfilmwiderstände aus den genannten Materialien können, bei ähnlich guten Temperaturbeständigkeiten des Widerstandes und Temperaturkoeffizienten des elektrischen Widerstandes, aber bei zumeist geringeren Einsatztemperaturen, Verwendung finden.

Hochohmige kontaktierende Filmwiderstände werden zweckmäßigerweise als Dickfilmwiderstände aus metalloxidischen Materialien wie $RuO_2$, $Rh_2O_3$, $IrO_2$, $OsO_2$, $TiO_2$, die ebenfalls einen positiven Temperaturkoeffizienten aufweisen, ausgebildet.

Alle diese Materialien werden in an sich bekannter Weise im Siebdruck auf die Glaskeramikträger aufgetragen und dort bei Temperaturen zwischen 500 und 1000°C eingebrannt.

Aus fertigungstechnischen Gründen bestehen die kontaktierenden Filmwiderstände einer Sensorschaltung oder aller Sensorschaltungen auf einem Träger vorzugsweise aus dem gleichen Material und sind entweder alle als Dünn- oder alle als Dickfilmwiderstände ausgebildet. Es ist aber ebensogut möglich, wenn auch aufwendiger, die einzelnen Filmwiderstände für bestimmte Anwendungen individuell auszulegen.

Die Anschlußbereiche der Filmwiderstände sind vorzugsweise mit Silberschichten oder Ag/Pd oder Au, Au/Pt/Pd verstärkt. Sie tragen geeignete Kontakte, die mit dauerelastischen, elektrisch leitenden Klebern auf der Basis von Silikonkautschucken oder Epoxidharzen oder mit Zinn- bzw. Zinn/Indium-Loten befestigt sind.

Die mit der Erfindung erzielbaren Vorteile liegen insbesondere darin, daß durch geeignete Wahl der Länge und Breite und Schichtdicke sowie der Flächenwiderstände und Temperaturkoeffizienten der kontaktierenden Dünn- und/oder Dickfilmwiderstände, der Temperaturkoeffizienten und der Geometrie der Glaskeramikwiderstände und der Art der Sensorschaltung (Parallel- und/oder Kettenschaltung) die Temperatur-Widerstandscharakteristik einer Sensorschaltung nach der Erfindung in weiten Grenzen variiert und an das jeweilige Meßproblem bzw. die Erfordernisse der dem Sensor nachgeschalteten Steuer- und -begrenzerelektronik angepaßt werden kann.

Die geometrische Gestaltung und Ausdehnung der Sensorschaltungen über die Flächen, deren Temperatur gesteuert und/oder überwacht werden soll, unterliegt praktisch keinen Beschränkungen, so daß alle wesentlichen Bereiche einer beheizten Fläche erfaßt werden können.

Nachfolgend wird die Erfindung anhand von Beispielen in Verbindung mit den Zeichnungen näher beschrieben. Es zeigen:

| | |
|---|---|
| Figur 1 | den Verlauf des spezifischen Volumenwiderstandes einer Glaskeramik aus dem System $SiO_2$-$Al_2O_3$-$Li_2O$ mit der Temperatur; |
| Figur 2 | einen streifenförmigen Filmwiderstand auf einem Glaskeramikträger, der mit der umgebenden Glaskeramik eine Parallelschaltung bildet, sowie ein Ersatzschaltbild für diese Anordnung; |
| Figur 3 | die Temperatur-Widerstandskennlinien zweier Sensoren nach Figur 2, die sich bezüglich der Auslegung der Einzelwiderstände unterscheiden; |
| Figur 4 | einen in der Fläche einer Kochzone einer Glaskeramikkochfläche als Stern mit mehreren Kreissektoren ausgebildeten Temperatursensor nach Figur 2; |
| Figur 5 | als Beispiel für einen aus dem Stand der Technik bekannten Kettenleiter zwei parallele Dünn- und/oder Dickfilmwiderstände, die einen streifenförmigen Glaskeramikwiderstand begrenzen; |
| Figur 6 | das Ersatzschaltbild für die aus dem Stand der Technik bekannte Anordnung aus Figur 5; |
| Figur 7 | zwei im Bereich einer Kochzone parallel geführte Dünn- und/oder Dickfilmwiderstände, die als Doppelspirale ausgebildet sind; diese Anordnung ist nicht Teil der Erfindung. |
| Figur 8 | einen Temperatursensor, der sich aus zwei an drei Punkten mit elektrischen Anschlußkontakten versehenen Dünn- und/oder Dickfilmwiderständen zusammensetzt; |
| Figur 9 | einen Kettenleiter, bei dem zur Wichtung einzelner Temperaturmeßstellen der Abstand zwischen den parallel geführten Filmwiderständen örtlich variiert; |
| Figur 10 | einen Temperaturbegrenzerstab nach der Erfindung und dessen Temperatur-Widerstandskennlinie; |
| Figur 11 | die Änderung des Gesamtwiderstandes des Temperaturbegrenzerstabes bei ungleichmäßiger Erwärmung; |

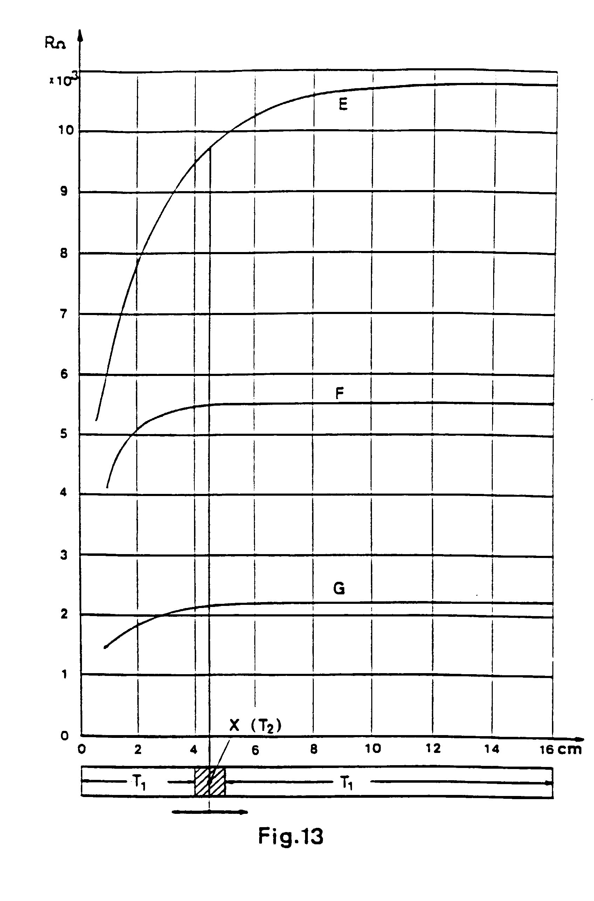

Figur 12      eine Sensoranordnung nach der Erfindung zur Ermittlung des Temperaturprofils längs einer Linie;

Figur 12      die Abhängigkeit des Gesamtwiderstandes eines speziell ausgelegten Kettenleiters von der Lage einer "heißen Stelle" auf dem Kettenleiter.

Figur 2 zeigt als Beispiel für eine Parallelschaltung gemäß der Erfindung einen Sensor, der aus einem streifenförmigen Dünn- oder Dickfilmwiderstand 1, der auf einer Trägerfläche 2 aus Glaskeramik eingebrannt ist und an seinen Enden mit elektrischen Anschlußkontakten 3 versehen ist, besteht, sowie ein Ersatzschaltbild dieses Sensors. Der Filmwiderstand $R_1$ und der elektrische Widerstand $R_2$, der von der Glaskeramik 4 gebildet wird, die unter dem Filmwiderstand und längs dessen Kanten angeordnet ist, sind parallel geschaltet. Der Gesamtwiderstand dieser Sensorschaltung ist:

$$R_{Sensor} = \frac{R_1 \cdot R_2}{R_1 + R_2}$$

Denkt man sich diese Parallelschaltung in einzelne differentielle "Zellen" aufgeteilt, so sind die Widerstände dieser Zellen hintereinander geschaltet. Damit stellt sich bei unterschiedlichen Temperaturen entlang des Widerstandsstreifens ein Sensorwiderstand ein, der proportional zur mittleren Temperatur der Sensorlinie ist. Einzelne heiße Stellen werden von diesem Sensor "ausgemittelt".

Für die Steuerung der Temperatur, beispielsweise in der Fläche der Kochzone eines Glaskeramikkochfeldes kann es zweckmäßig sein, den Filmwiderstand so auszulegen, daß die Temperatur-Widerstandscharakteristik des Sensors im wesentlichen allein von dem Filmwiderstand bestimmt wird. Dies läßt sich in einfacher Weise dadurch realisieren, daß man für den Filmwiderstand ein Material mit kleinem Flächenwiderstand, vorzugsweise mit einem positiven Temperaturkoeffizienten des elektrischen Widerstandes, wählt und dessen Abmessungen derart gestaltet, daß der Filmwiderstand bei der maximalen Anwendungstemperatur des Sensors deutlich kleiner ist, als der elektrische Widerstand der parallel geschalteten, umgebenden Glaskeramik.

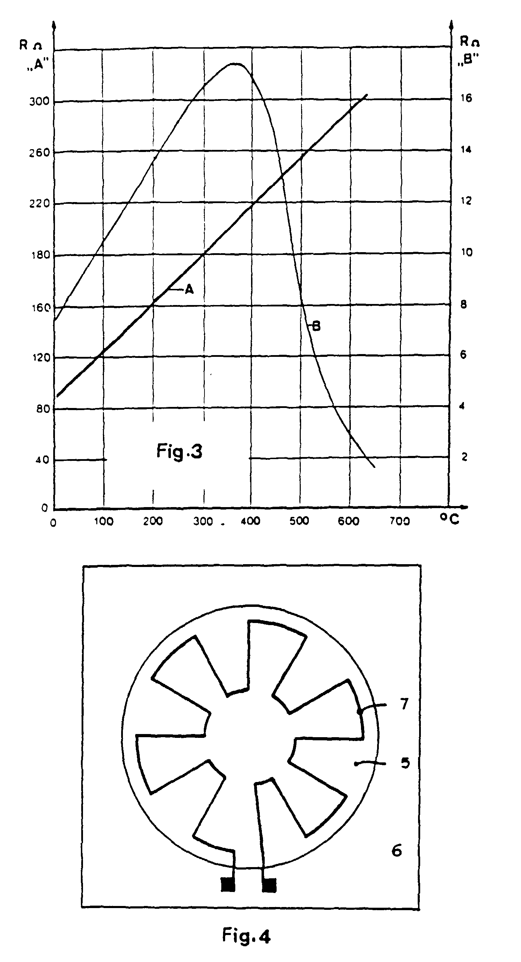

Figur 3 zeigt die Kennlinie "A" eines solchen Sensors, der aus einem Filmwiderstand mit den Abmessungen 160 x 10 mm$^2$ mit einem Flächenwiderstand von $0{,}3\ \Omega/\square$ besteht, der auf einem 1 mm dicken, 160 mm langen und 10 mm breiten Glaskeramikträger eingebrannt ist. Die Temperaturabhängigkeit des spezifischen Volumenwiderstandes des Glaskeramikträgers zeigt Figur 1. Der Sensor wurde als Ganzes auf die jeweiligen Temperaturen gemäß der Temperaturskala der Figur 3 erhitzt (es gilt die Widerstandsskala auf der rechten Seite der Figur).

Mit Hilfe eines entsprechend ausgebildeten Sensors kann die mittlere Temperatur einer Glaskeramikkochfläche im Bereich einer Kochzone, beginnend ab Raumtemperatur, angezeigt und exakt gesteuert werden.

Der Sensor kann in einfacher Weise in die Kochfläche eines Glaskeramikkochfeldes integriert werden. Hierzu wird der Filmwiderstand im Bereich einer Kochzone in die Glaskeramikkochfläche eingebrannt. Der streifenförmige Filmwiderstand wird dabei, um örtliche Überhitzungen auszuschließen, vorteilhafterweise so über die Kochfläche geführt, daß möglichst alle im Bezug auf die Temperaturbeanspruchung wesentlichen Bereiche der beheizten Fläche erfaßt werden. Insbesondere kann die geometrische Gestalt des Filmwiderstandes an die erwartete Temperaturverteilung in der Fläche der Kochzone im praktischen Betrieb, die im wesentlichen von der Art der Beheizung sowie der geometrischen Gestalt und der Anordnung der Beheizungsquelle und von der Anlegefläche der aufgesetzten Töpfe bestimmt wird, angepaßt werden.

Um die Behinderung des Wärmeflusses von der Beheizungsquelle zur Kochfläche gering zu halten, sollte die Gesamtfläche der Leiterbahnen im Bereich einer Kochzone bei allen erfindungsgemäßen Sensoren höchstens 10 % der Gesamtfläche der Kochzone ausmachen.

Eine bevorzugte geometrische Anordnung für einen erfindungsgemäßen Temperatursensor zeigt Figur 4. Der Sensor ist im Bereich der Kochzone 5 eines Glaskeramikkochfeldes 6 als Stern 7 mit mehreren Kreissektoren ausgebildet. Dieser Sensor erfaßt die wesentlichen Teilbereiche der Kochzone und bietet damit einen ausreichenden Überhitzungsschutz für die gesamte beheizte Fläche, der mit den aus dem Stand der Technik bekannten linienförmigen Temperatursensoren nicht erreicht werden kann. Die mittlere Temperatur der Kochzone kann, zum Beispiel in Abhängigkeit von dem momentanen Wärmeentzug durch einen aufgesetzten Topf, angezeigt und exakt gesteuert werden.

Wird für den Filmwiderstand ein Material mit großem Flächenwiderstand und vorteilhafterweise mit einem positiven Temperaturkoeffizienten des elektrischen Widerstandes gewählt (je nach Anwendungsfall können auch Filmwiderstände mit nichtlinearen Temperaturwiderstandscharakteristiken geeigneter sein), und wird dessen Geometrie so ausgelegt, daß der Filmwiderstand bei einer Temperatur innerhalb des Temperatureinsatzbereiches, beispielsweise bei etwa 480°C, mit dem Widerstand der Glaskeramik übereinstimmt, so ergibt sich ein Temperatursensor mit einer Temperatur-Widerstandskennlinie, die sich aus einem bei tiefen Temperaturen linear ansteigenden und bei hohen Temperaturen exponentiell abfallenden Ast zusammensetzt, wie in Figur 3 mit der Kurve "B" dargestellt ist. Die Daten dieses Temperatursensors sind:

| Dünn- oder Dickfilmwiderstand | Länge 160 mm |
| | Breite 10 mm |
| | Flächenwiderstand 10 $\Omega/\square$ |
| Glaskeramikträger und -widerstand | Länge 160 mm |
| | Breite 10 mm |
| | Dicke 5 mm |

Temperaturabhängigkeit des spezifischen Volumenwiderstandes gemäß Figur 1

Der lineare Anstieg der Widerstandskennlinie "B" mit der Temperatur ist identisch mit der Zunahme des Filmwiderstandes, der mit anwachsenderTemperatur in zunehmendem Maße von dem Widerstand der umgebenden Glaskeramik geshuntet wird. Deren exponentiell mit der Temperatur abfallender Widerstand rückt erst bei höheren Temperaturen (in der Figur ab etwa 349°C) in den Vordergrund.

Im Bereich einer Kochzone in eine Glaskeramikkochfläche integriert, z.B analog zur zuvor beschriebenen Ausführungsform als Stern mit mehreren Kreissektoren, kann dieser Sensor mit Vorteil zur Temperatursteuerung der Kochzonen bei niedrigen Kochflächentemperaturen genutzt werden, wobei der steil mit der Temperatur abfallende Teil der Temperatur-Widerstandskennlinie bei hohen Temperaturen ideale Voraussetzungen für eine wirkungsvolle Temperaturbegrenzung mit kleiner Schalthysteresis bietet. Die Lage des Umkehrpunktes der Temperatur-Widerstandskennlinie innerhalb des Temperatureinsatzbereiches des Sensors wird durch die Größe des Flächenwiderstandes und die geometrischen Abmessungen des Filmwiderstandes festgelegt. Auch dieser Temperatursensor reagiert im wesentlichen auf die mittlere Temperatur der überwachten Heizfläche.

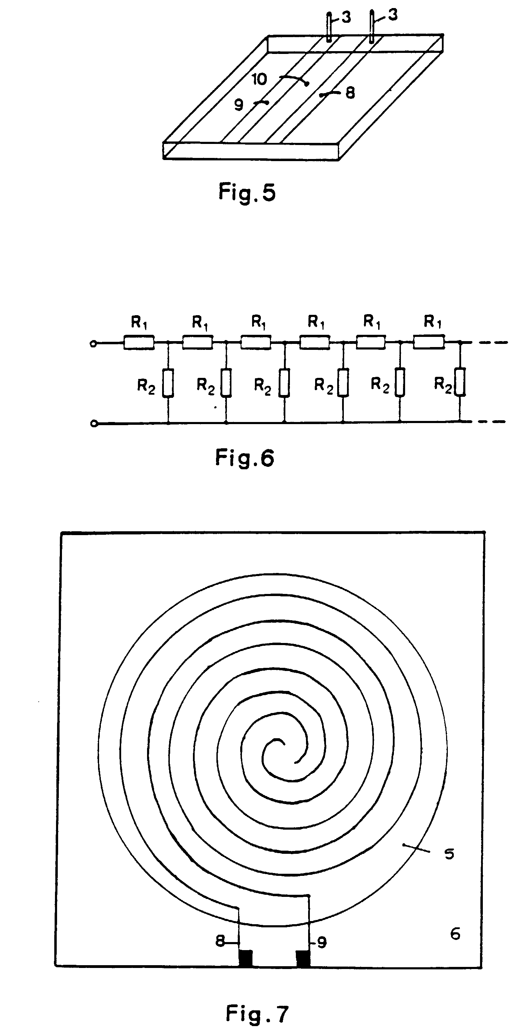

Figur 5 zeigt in der einfachsten Ausführung einen Kettenleiter nach dem Stand der Technik, der durch zwei parallele Dünn- und/oder Dickfilmwiderstände 8 und 9 und die dazwischenliegende Glaskeramik 10 gebildet wird. Das Ersatzschaltbild des Kettenleiters zeigt Figur 6. In diesem Ersatzschaltbild, das aus dem Stand der Technik bekannt ist, stellen die Widerstände $R_1$ und $R_2$ die Teilschaltung einer differentiellen "Widerstandszelle" des als Kettenleiter ausgebildeten Sensors dar. $R_1$ ist der Summenwiderstand, der aus der Reihenschaltung der beiden Teilabschnitte der kontaktierenden Dünn- und/oder Dickfilmwiderstände, die der Widerstandszelle zugeordnet sind, besteht. $R_2$ stellt den dazwischen angeordneten Glaskeramikwiderstand der Zelle dar. Für den Gesamtwiderstand $R_{Sensor}$ des Temperatursensors bzw. des Kettenleiters gilt der Kettenbruch:

$$R_{Sensor} = R_1 + \cfrac{1}{\cfrac{1}{R_2} + \cfrac{1}{R_1 + \cfrac{1}{\cfrac{1}{R_2} + \cfrac{1}{R_1 + \cdots}}}} + \cfrac{1}{R_1 + \cfrac{1}{\cfrac{1}{R_2} + \cfrac{1}{R_3}}}$$

mit:

$R_1 = R_1(\vartheta)$
$R_2 = R_2(\vartheta)$

und

$R_3 = R_1 + R_2$

bzw.

$$R_3 (\vartheta) = (R_1 + R_2) (\vartheta)$$
$\vartheta = \quad$ Temperatur

Ist der Flächenwiderstand der beiden Filmwiderstände klein gegenüber dem spezifischen Volumenwiderstand der Glaskeramik bei der maximalen Anwendungstemperatur des Sensors ($R_1 \rightarrow 0$), so sind die Widerstände $R_2$ im wesentlichen parallel geschaltet, wie aus dem Ersatzschaltbild in Figur 6 hervorgeht. Dies führt zu einer Temperatur-Widerstandskennlinie des Sensors, deren prinzipieller Verlauf mit dem Verlauf der Temperatur-Widerstandskennlinie der Glaskeramik in Figur 1 übereinstimmt. Die Temperatur-Widerstandskennlinie des Sensors für den Fall $R_1 << \rho (\vartheta)$ ergibt sich näherungsweise zu:

$$R_{Sensor}(\vartheta) = \rho(\vartheta) \cdot M$$

worin M einen von der Geometrie des Sensors bestimmten Maßstabsfaktor darstellt.

Für die geometrische Gestalt eines in die Kochfläche eines Glaskeramikkochfeldes integrierten Sensors, der aus einer Kettenschaltung mit zwei parallel geführten Dünn- und/oder Dickfilmwiderständen besteht, gelten die gleichen Richtlinien wie für einen aus einem einzelnen Filmwiderstand bestehenden Sensor einer Parallelschaltung. Die wesentlichen Bereiche der zu überwachenden Fläche sollten möglichst vollständig erfaßt werden, so daß auch dieser Sensor im Bereich einer Kochzone vorteilhafterweise, entsprechend Figur 4, als Stern mit mehreren Kreissektoren ausgebildet wird.

Werden die kontaktierenden Dünn- oder Dickfilmwiderstände 8 und 9 als Doppelspirale ausgeführt, wie in Figur 7 dargestellt, die sich über die gesamte Kochzone 5 eines Glaskeramikkochfeldes 6 erstreckt, so erfaßt der Sensor nahezu jede überhitzte Stelle der Kochzone, deckt aber auch einen großen Anteil der Gesamtfläche der Kochzone ab.

Ein Sensor zur Steuerung der Temperatur der Glaskeramikkochfläche im Bereich der Kochzonen, insbesondere bei "tiefen" Temperaturen (< 200°C), und zum Schutz vor Überhitzung der Kochzonen ist erfindungsgemäß aus zwei parallel geführten Dünn- und/oder Dickfilmwiderständen aufgebaut, die mit der dazwischenliegenden Glaskeramik einen Kettenleiter bilden, wobei einer der beiden streifenförmigen Filmwiderstände an seinen beiden Enden mit elektrischen Anschlußkontakten versehen ist. Die beiden Filmwiderstände sind so ausgelegt, daß einerseits der Kettenleiter ein exponentiell mit der Temperatur abnehmendes Temperaturbegrenzersignal bereitstellt, andererseits der an beiden Enden kontaktierte Filmwiderstand im gesamten Temperatureinsatzbereich ein zur Temperatursteuerung geeignetes Signal liefert. Durch die Trennung von Temperatursteuerung und Überhitzungsschutz bietet diese Anordnung gegenüber einer einfachen Parallelschaltung, die sowohl zur Temperatursteuerung als auch -begrenzung genutzt wird, den Vorteil einer größeren Sicherheit im Betrieb. Insbesondere können die Aufgaben der Temperatursteuerung und der Temperaturbegrenzung von zwei voneinander unabhängigen el. Schaltkreisen übernommen werden.

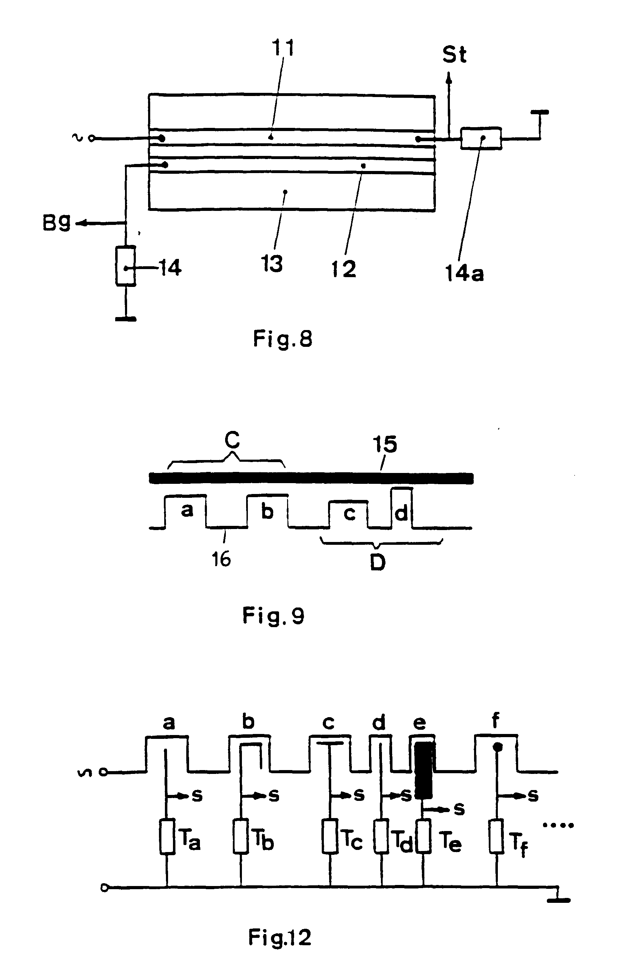

Die prinzipielle Schaltung dieser erfindungsgemäßen Anordnung geht aus Figur 8 hervor. Die Filmwiderstände 11 und 12 grenzen auf der Glaskeramikfläche 13 den Glaskeramikwiderstand des Kettenleiters ab. Das Begrenzersignal wird am Filmwiderstand 12 abgegriffen. Der niederohmige Filmwiderstand 11, der vorzugsweise eine lineare Temperatur-Widerstandskennlinie mit positivem Temperaturkoeffizienten aufweist, ist an seinen beiden Enden kontaktiert und liefert am Widerstand 14a das der Temperatur proportionale Steuersignal. Durch geeignete Dimensionierung der Widerstände 14 und 14a werden die beiden Temperaturwiderstandskennlinien der Schaltung voneinander weitgehend unabhängig.

Wird dieser Sensor im Bereich der Kochzone einer Glaskeramikkochfläche ebenfalls als Stern mit mehreren Kreissektoren ausgebildet, so erfaßt er alle wesentlichen Teilbereiche der Kochzone und bietet einen ausreichenden Überhitzungsschutz für die gesamte Fläche, und die mittlere Kochzonentemperatur wird nach Maßgabe des Wärmeentzuges durch einen aufgesetzten Topf, beginnend bei Raumtemperatur, gesteuert.

Zur Begrenzung der Temperatur einer beheizten Glaskeramikfläche in Abhängigkeit von den Temperaturen an geometrisch vorgegebenen Stellen der Glaskeramikfläche werden die beiden kontaktierenden Dünn-und/oder Dickfilmwiderstände einer Kettenschaltung zwar im wesentlichen parallel, jedoch mit wechselnden Abständen auf der Glaskeramikfläche angeordnet, wobei die Stellen des geringsten Abstandes mit den vorgegebenen Temperaturmeßstellen zusammenfallen. Dieser Temperatursensor liefert ein Signal, das im wesentlichen von der Temperatur der vorgegebenen Meßstellen abhängig ist. Dabei ist die Meßstelle mit der höchsten Temperatur für den Gesamtwiderstand des Sensors bestimmend.

Figur 9 zeigt beispielhaft in einer einfachen Ausführung die prinzipielle Anordnung der auf der Glaskeramik eingebrannten Dünn- und/oder Dickfilmwiderstände für einen solchen Sensor.

Ein als einfache Linie ausgebildeter Filmwiderstand 15 und ein paralleler mäanderförmiger Filmwiderstand 16 bilden an den Stellen größter Annäherung die Temperaturmeßstellen aus. Das Prinzip ist in Figur 9 bei C mit den Stellen a und b dargestellt. Mit verschieden großen Abständen zwischen dem Mäander und dem als Linie ausgebildeten Filmwiderstand erfolgt eine örtliche Gewichtung der Meßstellentemperatur. Dies ist in Figur 9 bei D mit den Stellen c und d angedeutet.

Eine örtliche Gewichtung einzelner Temperaturmeßstellen kann auch dadurch erzielt werden, daß wenigstens einer von zwei einander zugeordneten Filmwiderständen als Sinus- oder Dreieckslinie ausgebildet ist, oder als Linie, deren Abstand zum im wesentlichen parallel verlaufenden Widerstand gemäß einer durch die jeweilige Temperaturverteilung der zu überwachenden Fläche vorgegebenen Funktion bestimmt ist.

Erfahrungsgemäß ist die Reparatur der in den zu überwachenden Flächen integrierten Sensoren bei Unterbrechung der kontaktierenden Filmwiderstände nicht möglich, da die ursprünglichen Eigenschaften des Sensors dabei nicht wieder hergestellt werden können. Aus Kostengründen beziehungsweise aus Gründen der einfacheren Austauschbarkeit stark beanspruchter Sensoren ist es dann zweckmäßiger, die Sensoren auf eigenen, von der zu überwachenden Heizfläche getrennten Glaskeramikträgern zu realisieren. Diese werden dann unmittelbar unterhalb der zu überwachenden Fläche angebracht und dort von deren Strahlung beheizt.

Die Glaskeramikträger können sowohl als Flächen als auch als Stäbe mit beliebigem Querschnitt oder Hohlkörper ausgebildet sein.

Vorzugsweise wird ein solcher Sensor als "Temperaturbegrenzerstab" ausgebildet. Ein Temperaturbegrenzerstab nach der Erfindung besteht aus einem stabförmigen Träger aus Glaskeramik, mit rundem, ovalem oder rechteckigem, vorzugsweise quadratischem Querschnitt, wobei der Stab bei rechteckigem Querschnitt auf zwei gegenüberliegenden Seiten ganzflächig, bei ovalem oder rundem Querschnitt längs zweier gegenüberliegender Linien mit den Filmwiderständen kontaktiert ist. Der Begrenzerstab stellt somit eine Kettenschaltung dar.

Der Widerstand der in Reihe geschalteten kontaktierenden Filmwiderstände ist vorteilhafterweise im gesamten Temperatureinsatzbereich kleiner als der Widerstand des abgegrenzten Trägermaterials bei der maximalen Anwendungstemperatur des Sensors, so daß die Temperatur-Widerstandscharakteristik der Schaltung im wesentlichen von dem Widerstand der Glaskeramik bestimmt wird. In Bezug auf die Kettenschaltung bedeutet das, daß der Widerstand $R_1$ (Fig. 6) im gesamten Temperaturbereich des Begrenzstabes viel kleiner als der Glaskeramikwiderstand $R_2$ ist.

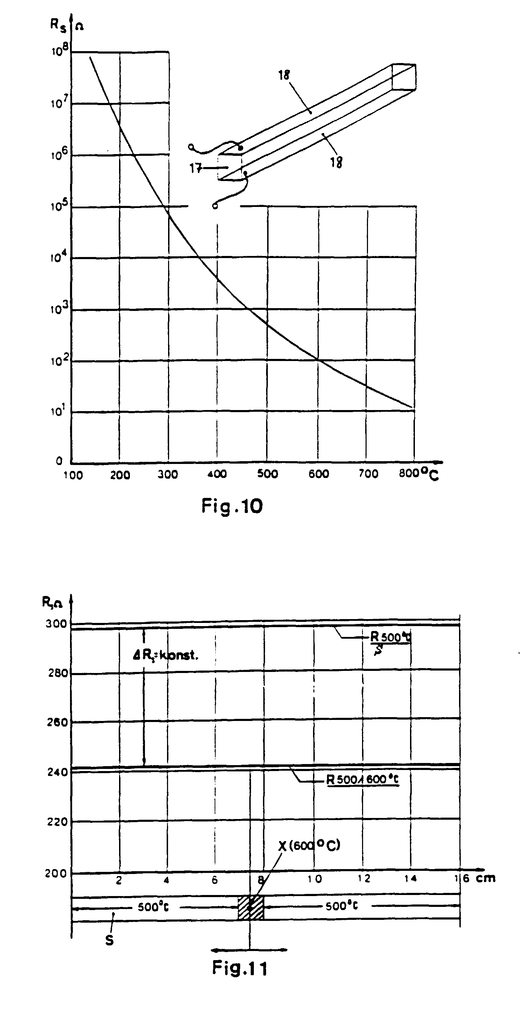

Figur 10 zeigt einen als "Temperaturbegrenzerstab" 17 für die Kochzonen von Glaskeramikkochflächen ausgebildeten Sensor mit seiner Temperatur-Widerstandskennlinie. Diese Kennlinie gilt für einen Stab mit den folgenden Daten:

Länge der beheizten Zone: 160 mm
Querschnitt: 5 x 10 mm$^2$
Kontaktierende Filmwiderstände 18: Ganzflächig auf zwei einander gegenüberliegenden Seiten, Flächenwiderstand $3 \cdot 10^{-3}$ $\Omega/\square$ , Temperaturkoeffizient des elektrischen Widerstandes 0,0039 $\Omega$/K.

Der Stab wird zusammen mit einer einfachen Schaltelektronik (zum Beispiel einem Komparator) betrieben und ist in derselben Weise in den Heizelementen der Kochzonen montiert, wie die bekannten Schutztemperaturbegrenzerstäbe. Er wird wie diese sowohl von der Strahlung der Kochzone als auch von der Strahlung des Heizelementes beheizt. Aufgrund der gut angenäherten Parallelschaltung der Zellwiderstände des Sensorstabes wird der Gesamtwiderstand von dem kleinsten Widerstand der heißesten Zelle bestimmt und ist weitgehend unabhängig von der Lage des heißesten Punktes des Sensorstabes. Eine Verschiebung des Schaltpunktes der Temperaturbegrenzung, wie sie bei den als Schutztemperaturbegrenzern ausgebildeten Stabausdehnungsfühlern nach dem Stande der Technik durch die scheinbare Verkürzung des Fühlerstabes bei örtlich unterschiedlichem Wärmeentzug zu beobachten ist, tritt nicht auf.

In Figur 11 sind die Verhältnisse bei ungleichmäßiger Erwärmung des Temperaturbegrenzerstabes S nach der Erfindung dargestellt. Dazu ist angenommen, daß der Stab S in seiner ganzen Länge 1, mit Ausnahme eines 1 cm breiten Bereiches x, eine Temperatur von 500°C angenommen hat, während der ausgenommene Teilbereich 600°C heiß ist. Der heißere Teilbereich wird, wie in Figur 11 unten angedeutet, längs des Stabes verschoben. Darüber ist der Gesamtwiderstand R des Sensors und dessen Abweichung $\Delta$ R von dem Widerstand $R_S$ des Sensors, der in seiner gesamten Länge 500°C heiß ist, aufgetragen. Diese Widerstandsabweichung und die davon bestimmte Temperatursignalabweichung sind nahezu unabhängig von dem Ort des heißesten Punktes.

Die geometrische Gestaltung und Ausdehnung einer Sensorschaltung über eine beheizte Fläche richtet sich nach der Art und Geometrie der Beheizung und der erwarteten Temperaturverteilung im praktischen Betrieb. Oft ist es zweckmäßiger, anstelle eines einzelnen, über große Flächen ausgedehnten Sensors, der beispielsweise als Meßelement für eine Temperaturbegrenzung dienen soll, mehrere kleine Sensoren als Sensoranordnung in die zu überwachenden Flächen zu integrieren. Dies bietet gleichzeitig die Möglichkeit, Temperaturunterschiede, wie auch die ungefähre Lage eines Temperaturmaximums in den beheizten Flächen zu messen. Die geringe Wärmeleitung von 2 bis 3 W/mK der Glaskeramiken gewährleistet dabei eine relativ gute thermische Entkopplung der einzelnen Sensoren.

Eine Anordnung mit vielen voneinander unabhängigen Temperatursensoren, beispielsweise zur Bestimmung von Temperaturprofilen entlang einer Linie, ist in Figur 12 dargestellt. Diese Anordnung ist auf einem streifenförmigen Glaskeramikträger eingebrannt. Die einzelnen Sensoren a bis f usw., setzten sich aus einem im wesentlichen mäanderförmigen Dünn- oder Dickfilmwiderstand, der allen Sensoren gemeinsam ist, und vielen streifenförmigen Dünn- und/oder Dickfilmwiderständen, die in die "Zellen" des Mäanders hineinragen, zusammen. Elektrisch sind die Sensoren gegenseitig durch den Mäander abgeschirmt. Die Temperatur-Widerstandscharakteristik der Einzelsensoren ist über die Geometrie des Mäanders und die Größe der Flächenwiderstände der in den Mäander hineinragenden Dünn- und/ oder Dickfilmwiderstände für jeden Sensor der Anordnung individuell festgelegt.

Verschiedene Beispiele möglicher Geometrien gehen aus Figur 12 hervor. Jedem Sensor ist ein Teilerwiderstand zugeordnet ($T_a$ bis $T_f$ usw.), die Signale werden bei S abgegriffen.

Ein Temperatursensor, dessen Signalamplitude von der Lage der heißesten Stelle in der von dem Sensor erfaßten Fläche abhängig ist, ist wiederum als Kettenleiter ausgebildet, wobei der Gesamtwiderstand der beiden parallel verlaufenden Dünn- und/oder Dickfilmwiderstände größer ist als der auf die Längeneinheit bezogenen elektrische Widerstand der Glaskeramik bei der maximalen Einsatztemperatur, der von den beiden Filmwiderständen auf dem Glaskeramikträger abgegrenzt und kontaktiert wird. Figur 13 zeigt mit den Kurven E bis G die Abhängigkeit des Sensorwiderstandes von der Lage eines 1 cm breiten "Hot Spot", der um 100 K heißer ist, als der übrige Sensor, und der längs des Sensors, der als Stab ausgebildet ist, verschoben wird. Die Kurven E und F gehören zu einem Sensorstab mit den folgenden Daten:

Glaskeramikstab mit:

Stablänge: 160 mm
Stabbreite: 10 mm
Stabdicke: 5 mm

Spezifischer Volumenwiderstand der Glaskeramik gemäß Figur 1.

| Kontaktierende Filmwiderstände | $160 \times 10\ mm^2$, Flächenwiderstand 1000 $\Omega/\square$ Temperaturkoeffizient $T_K = 0{,}0039\ \Omega/K$ | | |
|---|---|---|---|
| Temperaturen | Kurve E: | Hot Spot: | $T_2 = 500°C$, |
| | | übriger Stab: | $T_1 = 400°C$ |
| | Kurve F: | Hot Spot: | $T_2 = 600°C$, |
| | | übriger Stab: | $T_1 = 500°C$ |
| Zu Kurve G | Glaskeramikstab wie oben; Flächenwiderstand der kontaktierenden Widerstände 100 $\Omega/\square$, $T_k = 0{,}0039\ \Omega/K$ Hot Spot: $T_2 = 600°C$, übriger Stab: $T_1 = 500°C$ | | |

Der Stromtransport in der Glaskeramik erfolgt durch Ionenleitung. Zur Vermeidung von Polarisationserscheinungen und elektrolytischer Zersetzung sind die Sensoren ausschließlich mit Wechselstrom, vorzugsweise bei Frequenzen unterhalb von 100 Hz zu betreiben.

**Patentansprüche**

1. Temperatursensoranordnung, insbesondere zur Leistungssteuerung und -begrenzung bei Glaskeramikkochfeldern,
   bei welcher auf einem Glaskeramikträger wenigstens ein Filmwiderstand aufgebracht ist, wobei der an den Filmwiderstand angrenzende Bereich des Glaskeramikträgers einen Glaskeramiktemperaturmeßwiderstand bildet,
   **dadurch gekennzeichnet**,
   daß der Filmwiderstand so kontaktiert ist, daß er mit dem Glaskeramiktemperaturmeßwiderstand eine Parallelschaltung bildet, und daß der Filmwiderstand bei einer Temperatur innerhalb des Temperatureinsatzbereichs mit dem elektrischen Widerstand der parallel geschalteten Glaskeramik übereinstimmt, so daß die Temperatur- Widerstandscharakteristik der Schaltung unterhalb dieser Temperatur durch den Filmwiderstand und oberhalb dieser Temperatur durch den exponentiell mit der Temperatur abfallenden Glaskeramikwiderstand bestimmt wird.

2. Temperatursensoranordnung, insbesondere zur Leistungssteuerung und -begrenzung bei Glaskeramik-Kochfeldern,
   bei welcher auf einem Glaskeramikträger paarweise einander zugeordnete Filmwiderstände angeordnet sind, welche auf dem Glaskeramikträger Teilbereiche begrenzen und kontaktieren, wobei die Filmwiderstände mit der dazwischenliegenden Glaskeramik eine Kettenschaltung bilden,
   **dadurch gekennzeichnet**,
   daß wenigstens einer von zwei einander zugeordneten Filmwiderständen, der zur Temperaturmessung bei niedrigen Temperaturen geeignet ist, an beiden Enden mit elektrischen Anschlußkontakten versehen und mit der umgebenden Glaskeramik parallel geschaltet ist,
und einen von der zugeordneten Kettenschaltung weitgehend unabhängigen Meßwiderstand bildet.

3. Temperatursensoranordnung nach Anspruch 2,
   **dadurch gekennzeichnet**,
   daß der an beiden Enden kontaktierte Filmwiderstand im gesamten Temperatureinsatzbereich deutlich niedriger ist, als der Widerstand der umgebenden Glaskeramik bei der maximalen Einsatztemperatur des Sensors, so daß die Temperatur-Widerstandscharakteristik der Parallelschaltung im gesamten Temperatureinsatzbereich des Sensors im wesentlichen von dem Filmwiderstand bestimmt wird.

4. Temperatursensoranordnung nach wenigstens einem der Ansprüche 1 bis 3,
   **dadurch gekennzeichnet**,
   daß die Filmwiderstände in an sich bekannter Weise in die Oberfläche einer Kochzone eines Glaskeramikkochfeldes eingebrannt sind.

5. Temperatursensoranordnung nach wenigstens einem der Ansprüche 1 bis 4,
   **dadurch gekennzeichnet**,
   daß die Gestalt der Filmwiderstände in der Fläche einer Kochzone so an die erwartete Temperaturverteilung der beheizten Fläche im Betrieb angepaßt ist, daß alle bezüglich der Temperaturbelastung wesentlichen Bereiche der beheizten Fläche erfaßt werden.

6. Temperatursensoranordnung nach wenigstens einem der Ansprüche 1 bis 5,
   **dadurch gekennzeichnet**,
   daß ein einzelner Filmwiderstand einer Parallelschaltung bzw. zwei parallele Filmwiderstände einer Kettenschaltung in der Fläche der Kochzone als Stern mit mehreren Kreissektoren ausgebildet sind.

7. Temperatursensoranordnung nach wenigstens einem der Ansprüche 1 bis 6,
   **dadurch gekennzeichnet**,
   daß ein einzelner Filmwiderstand einer Parallelschaltung bzw. zwei parallele streifenförmige Filmwiderstände einer Kettenschaltung in der Fläche der Kochzone als Doppelspirale ausgebildet sind.

8. Temperatursensoranordnung nach wenigstens einem der Ansprüche 1 bis 7,
   **dadurch gekennzeichnet**,
   daß die Filmwiderstände aus einem Material mit positivem Temperaturkoeffizienten des elektrischen Widerstandes bestehen.

9. Temperatursensoranordnung nach wenigstens einem der Ansprüche 1 bis 8,
   **dadurch gekennzeichnet**,
   daß die Filmwiderstände Dünnfilmwiderstände sind, die aus metallischen Schichten aus Au, Ag, Pt, Pd, Au/Ag, Au/Pt, Ag/Pd und/oder Au/Pt/Pd bestehen.

10. Temperatursensoranordnung nach wenigstens einem der Ansprüche 1 bis 9,
    **dadurch gekennzeichnet**,
    daß die kontaktierenden Filmwiderstände Dickfilmwiderstände aus Au, Ag, Pt, Pd, AulAg, Au/Pt, Ag/Pd, Au/Pt/Pd, $RuO_2$, $Rh_2O_3$, $IrO_2$, $OsO_2$, und/oder $TiO_2$ bestehen.

11. Temperatursensoranordnung nach wenigstens einem der Ansprüche 1 bis 10,
    **dadurch gekennzeichnet**,
    daß die kontaktierenden Filmwiderstände einer Sensorschaltung oder aller Sensorschaltungen auf einem Träger aus dem gleichen Material bestehen und entweder alle als Dünn- oder alle als Dickfilmwiderstände ausgebildet sind.

12. Temperatursensoranordnung nach wenigstens einem der Ansprüche 1 bis 11,
    **dadurch gekennzeichnet**,
    daß die kontaktierenden Filmwiderstände in ihren Anschlußbereichen durch Schichten aus Ag, Ag/Pd, Au, Au/Pt/Pd verstärkt sind und elektrische Kontakte tragen, die auf den verstärkten Anschlußbereichen mit Zinn- oder Zinn/Indium-Loten oder mit elektrisch leitenden Silikonkautschukklebern oder Klebern auf der Basis von Epoxidharzen befestigt sind.

13. Temperatursensoranordnung nach wenigstens einem der Ansprüche 1 bis 12, ausgebildet als Temperaturbegrenzerstab für Glaskeramikkochflächen,
**dadurch gekennzeichnet**,

daß der Träger aus Glaskeramik als Stab mit ovalem, rundem oder rechteckigem, vorzugsweise quadratischem Querschnitt ausgebildet ist, wobei bei rechteckigem Querschnitt der Stab auf zwei gegenüberliegenden Seiten ganzflächig,
bei ovalem oder rundem Querschnitt längs zweier gegenüberliegender Linien mit den Filmwiderständen kontaktiert ist.

## Claims

1. Temperature sensor arrangement, in particular for power control and limiting in glass ceramic cooking hobs, in which at least one film resistor is mounted on a glass ceramic base, that region of the glass ceramic base which is adjacent to the film resistor forming a glass ceramic temperature measuring resistor,
characterized in that the film resistor is made contact with such that it forms a parallel circuit with the glass ceramic temperature measuring resistor, and in that the film resistor corresponds, at a temperature within the operating temperature range, with the electrical resistance of the parallel-connected glass ceramic, so that the temperature/resistance characteristic of the circuit is governed, below this temperature, by the film resistor and, above this temperature, by the glass ceramic resistance which falls exponentially with the temperature.

2. Temperature sensor arrangement, in particular for power control and limiting in glass ceramic cooking hobs, in which film resistors, which are assigned to one another in pairs, are arranged on a glass ceramic base and limit and make contact with subregions on the glass ceramic base, the film resistors forming a concatenated circuit with the glass ceramic inbetween,
characterized in that at least one of two mutually associated film resistors, which is suitable for temperature measurement at low temperatures, is provided at both ends with electrical connecting contacts and is connected in parallel with the surrounding glass ceramic, and forms a measuring resistor which is largely independent of the associated concatenated circuit.

3. Temperature sensor arrangement according to Claim 2,
characterized in that the resistance of the film resistor, which is made contact with at both ends, is considerably lower in the entire operating temperature range than the resistance of the surrounding glass ceramic at the maximum operating temperature of the sensor, so that the temperature/resistance characteristic of the parallel circuit is governed essentially by the film resistor throughout the entire operating temperature range of the sensor.

4. Temperature sensor arrangement according to at least one of Claims 1 to 3,
characterized in that the film resistors are burned, in a manner known per se, into the surface of a cooking zone of a glass ceramic cooking hob.

5. Temperature sensor arrangement according to at least one of Claims 1 to 4,
characterized in that the shape of the film resistors in the surface of a cooking zone is matched to the expected temperature distribution of the heated area in operation, such that all those regions of the heated area which are significant in terms of the temperature load are covered.

6. Temperature sensor arrangement according to at least one of Claims 1 to 5,
characterized in that a single film resistor of a parallel circuit or two parallel film resistors of a concatenated circuit are constructed in the surface of the cooking zone as a star having a plurality of circle sectors.

7. Temperature sensor arrangement according to at least one of Claims 1 to 6,
characterized in that a single film resistor of a parallel circuit or two parallel film resistors, in the form of strips, of a concatenated circuit are constructed in the surface of the cooking zone as a double spiral.

8. Temperature sensor arrangement according to at least one of Claims 1 to 7,
characterized in that the film resistors are made from a material whose electrical resistance has a positive temperature coefficient.

EP 0 467 133 B1

9. Temperature sensor arrangement according to at least one of Claims 1 to 8, characterized in that the film resistors are thin film resistors which are made of metallic layers of Au, Ag, Pt, Pd, Au/Ag, Au/Pt, Ag/Pd and/or Au/Pt/Pd.

10. Temperature sensor arrangement according to at least one of Claims 1 to 9, characterized in that the contact-making film resistors are thick film resistors of Au, Ag, Pt, Pd, Au/Ag, Au/Pt, Ag/Pd, Au/Pt/Pd, $RuO_2$, $Rh_2O_3$, $IrO_2$ $OsO_2$ and/or $TiO_2$.

11. Temperature sensor arrangement according to at least one of Claims 1 to 10, characterized in that the contact-making film resistors of a sensor circuit or of all the sensor circuits on a base are made of the same material and are all designed as either thin or thick film resistors.

12. Temperature sensor arrangement according to at least one of Claims 1 to 11, characterized in that the contact-making film resistors are reinforced in their connecting regions by layers of Ag, Ag/Pd, Au, Au/Pt/Pd and are fitted with electrical contacts which are mounted on the reinforced connecting regions by tin or tin/indiun soldering, by electrically conductive silicone rubber stickers, or stickers based on epoxy resins.

13. Temperature sensor arrangement according to at least one of Claims 1 to 12, designed as a temperature limiter bar for glass ceramic cooking surfaces, characterized in that the base is made from glass ceramic as a bar with an oval, round or rectangular, preferably square, cross-section, the bar making contact with the film resistors over the entire surface on two opposite sides if it has a rectangular cross-section, and along two opposite lines if it has an oval or round cross-section.

**Revendications**

1. Dispositif de mesure de la température, en particulier en vue de la commande et de la limitation de puissance pour des plaques de cuisson en céramique de verre, pour lequel on applique, sur un support en céramique de verre, au moins une résistance en couches, la zone adjacente à la résistance en couches du support en céramique de verre formant une résistance de mesure de la température de la céramique de verre, caractérisé en ce que la résistance en couches a des contacts tels qu'elle forme avec la résistance de mesure de la température de la céramique de verre un montage en parallèle, et que la résistance en couches concorde, pour une température en deça du domaine d'utilisation en température, avec la résistance électrique de la céramique de verre branchée en parallèle, de sorte que la caractéristique température-résistance du montage soit déterminée, en-dessous de cette température, par la résistance en couches, et au-dessus de cette température, par la résistance de la céramique de verre chutant exponentiellement avec la température.

2. Dispositif de mesure de la température, en particulier en vue de la commande et de la limitation de puissance pour des plaques de cuisson en céramique de verre, pour lequel on dispose, sur un support en céramique de verre, des résistances en couches conjuguées l'une à l'autre par paires, qui limitent, sur le support en céramique de verre, des domaines partiels et assurent le contact avec ceux-ci, les résistances en couches formant avec la céramique de verre qui se trouve placée entre elles, un montage en série, caractérisé en ce qu'au moins une des deux résistances en couches conjuguées l'une à l'autre, qui est appropriée à la mesure de la température pour des températures basses, est pourvue aux deux extrémités de contacts de connexion électrique, et est branchée en parallèle avec la céramique de verre qui l'entoure, et forme une résistance de mesure indépendante dans une large mesure du montage en série adjoint.

3. Dispositif de mesure de la température selon la revendication 2, caractérisé en ce que la résistance en couches mise en contact aux deux extrémités dans l'ensemble du domaine d'utilisation en température est nettement inférieure à la résistance de la céramique de verre qui l'entoure pour une température d'utilisation maximale du capteur, de sorte que la caractéristique température-résistance du montage en parallèle dans l'ensemble du domaine d'utilisation en température du capteur est déterminée pour l'essentiel par la résistance en couches.

4. Dispositif de mesure de la température selon au moins l'une quelconque des revendications 1 à 3, caractérisé en ce que les résistances en couches sont appliquées par cuisson d'une manière connue en soi dans la surface d'une zone de cuisson d'une plaque de cuisson en céramique de verre.

5. Dispositif de mesure de la température selon au moins l'une quelconque des revendications 1 à 4, caractérisé en ce que la forme des résistances en couches dans la surface d'une zone de cuisson est adaptée de telle manière à la répartition de température escomptée de la surface chauffée en cours de fonctionnement, que tous les domaines essentiels de la surface chauffée en ce qui concerne la sollicitation thermique sont pris en compte.

6. Dispositif de mesure de la température selon au moins l'une quelconque des revendications 1 à 5, caractérisé en ce qu'une résistance individuelle en couches d'un montage en parallèle est formée, respectivement deux résistances parallèles en couches d'un montage en série sont formées, dans la surface de la zone de cuisson en forme d'étoile ayant plusieurs secteurs circulaires.

7. Dispositif de mesure de la température selon au moins l'une quelconque des revendications 1 à 6, caractérisé en ce qu'une résistance individuelle en couches d'un montage en parallèle est formée, respectivement deux résistances parallèles en couches sous forme de rubans d'un montage en série sont formées, dans la surface de la zone de cuisson, en forme de spirale double.

8. Dispositif de mesure de la température selon au moins l'un quelconque des revendications 1 à 7, caractérisé en ce que les résistances en couches se composent d'un matériau ayant un coefficient de température positif de la résistance électrique.

9. Dispositif de mesure de la température selon au moins l'une quelconque des revendications 1 à 8, caractérisé en ce que les résistances en couches sont des résistances en couches minces, qui se composent de couches métalliques en Au, Ag, Pt, Pd, Au/Ag, Au/Pt, Ag/Pd et/ou de Au/Pt/Pd.

10. Dispositif de mesure de la température selon au moins l'une quelconque des revendications 1 à 9, caractérisé en ce que les résistances en couches qui assurent le contact se composent de résistances en couches épaisses en Au, Ag, Pt, Pd, Au/Ag, Au/Pt, Ag/Pd, Au/Pt/Pd, $RuO_2$, $Rh_2O_3$, $IrO_2$, $OsO_2$ et/ou $TiO_2$.

11. Dispositif de mesure de la température selon au moins l'une quelconque des revendications 1 à 10, caractérisé en ce que les résistances en couches, qui assurent le contact, d'un montage de dispositif de mesure ou de tous les dispositifs de mesure, se composent d'un support du même matériau et sont formées soit toutes en tant que résistances en couches minces, soit toutes en tant que résistances en couches épaisses.

12. Dispositif de mesure de la température selon au moins l'une quelconque des revendications 1 à 11, caractérisé en ce que les résistances en couches, qui assurent le contact, sont renforcées dans leurs domaines de connexion par des couches en Ag, Ag/Pd, Au, Au/Pt/Pd, et portent des contacts électriques qui sont fixés sur les domaines de connexion renforcés à l'aide d'une soudure à l'étain ou à l'étain/indium ou à l'aide d'adhésifs en caoutchouc aux silicones électro-conducteurs ou d'adhésifs à base de résines époxydes.

13. Dispositif de mesure de la température selon au moins l'une quelconque des revendications 1 à 12, formé en tige de limitation de la température, caractérisé en ce que le support en céramique de verre est formé en forme de tige ayant une section transversale ovale, ronde ou rectangulaire, de préférence carrée, la tige assurant le contact avec les résistances en couches, pour la section transversale rectangulaire de la tige, sur toute la surface de deux côtés opposés, pour la section transversale ovale ou ronde, le long de deux lignes opposées.

Fig.1

Fig.2

Fig.3

Fig.4

Fig. 5

Fig. 6

Fig. 7

Fig.8

Fig.9

Fig.12

Fig.10

Fig.11

Fig.13